# EUROPEAN PATENT APPLICATION

(11) **EP 2 464 170 A1**
(43) Date of publication of application: **13.06.2012**
(21) Application number: 10840454.2
(22) Date of filing: 23.11.2010
(51) Int. Cl.: H04W 36/18

(54) **METHOD AND BASE STATION CONTROLLER FOR SOFT HANDOVER CELL ASSIGNMENT IN GROUP COMMUNICATION SYSTEM**

(30) Priority: 30.12.2009 CN 200910215873
(71) Applicant: ZTE Corporation, Shenzhen, Guangdong 518057 (CN)
(72) Inventor: WANG, Kai, Guangdong 518057 (CN)
(74) Representative: Pons Ariño, Maria Purificación
(86) International application number: PCT/CN2010/079012
(87) International publication number: WO 2011/079665

(57) **Abstract**

The present invention provides a method for soft handover cell assignment in a trunking communication system and a base station controller. The method includes: receiving, by a Base Station Controller (BSC), pilot environment measurement report domains from one or more terminal UEs in one scheduling period; selecting, by the BSC, a pre-determined number of cells from the cells indicated by all the pilot environment measurement report domains received in the scheduling period; and transmitting, by the BSC, broadcast channel assignment messages carrying the information about the pre-determined number of cells to the one or more UEs in the scheduling period. By means of the present invention, a plurality of UEs in the trunking communication system can be simultaneously assigned with cells for soft handover.

## Description

### Field of the Invention

The present invention relates to communication field, and in particular to a method for soft handover cell assignment in a trunking communication system, and a Base Station Controller (referred to as BSC).

### Background of the Invention

With the development of the CDMA (Code Division Multiple Access) trunking communication technology, how to improve assignment into the scheme of soft handover in the CDMA trunking system becomes a key issue to be studied in the industry.

In an ordinary voice communication system, a soft handover cell assignment method capable of supporting a single user is provided. In the method, a BSC assigns, in response to a pilot environment measurement report domain from a single user, to the user all the cells or a certain number of cells indicated in the report domain.

In the existing trunking communication system, there are multiple users in the cells to which the trunking services are accessed; the distribution and environment of the cells of every user are different; and the cells carried in the pilot environment measurement report domains reported by every user are also different. The inventor finds that, as the BSC can only respond to the pilot environment measurement report domain from a single user when the above assignment method in the ordinary voice communication system is used for cell assignment, the BSC cannot respond to different pilot environment measurement report domains from multiple users in the trunking communication system.

### Summary of the Invention

A method for soft handover cell assignment in a trunking communication system and a base station controller are provided in the present invention to solve the problem in the related art that the BSC of the trunking communication system cannot respond to different pilot environment measurement report domains from multiple users in the trunking communication system.

According to one aspect of the present invention, a method for soft handover cell assignment in a trunking communication system is provided, wherein the method includes: receiving, by a Base Station Controller (BSC), pilot environment measurement report domains from one or more terminal UEs in one scheduling period; selecting, by the BSC, a pre-determined number of cells from the cells indicated by all the pilot environment measurement report domains received in the scheduling period; and transmitting, by the BSC, broadcast channel assignment messages carrying the information about the pre-determined number of cells to the one or more UEs in the scheduling period.

Preferably, the pre-determined number is smaller than the number of searchers of each UE in the one or more UEs.

Preferably, the step of selecting, by the BSC, the pre-determined number of cells from the cells indicated by all the pilot environment measurement report domains received in the scheduling period includes: sequencing, by the BSC, the one or more UEs in a time order of the receiving time of all the pilot environment measurement report domains, to obtain a sequenced UE list; and a selecting step: judging, by the BSC, whether the number N of cells satisfying pre-determined requirements in the cells indicated by pilot environment measurement report domain of the current UE in the UE list is larger than or equal to a pre-determined remaining number M. If yes, selecting M cells from the cells satisfying the pre-determined requirements; and if not, selecting all the cells satisfying the pre-determined requirements; designating M=M-N, designating the next UE of the current UE in the UE list to be the current UE; and returning to the selecting step. In the above, the pre-determined requirements include: the carrier frequency of a cell being identical to the carrier frequency of the current cell, the geographic location of the cell being adjacent to a source cell, and the cell having not been selected, when the selecting step is implemented for the first time, the current UE is the first UE in the UE list, and the pre-determined remaining number M equals to the pre-determined number.

Preferably, in the case where the number N of the cells satisfying the pre-determined requirements is larger than or equal to the pre-determined remaining number M, the step of selecting M cells from the cells satisfying the pre-determined requirements includes: sequencing the cells satisfying the pre-determined requirements in a pilot strength decreasing order, to obtain a sequenced cell list; and selecting the top M cells in the cell list.

Preferably, in the process of sequencing the cells satisfying the pre-determined requirements in a pilot strength decreasing order, if there are two or more cells that have the same pilot strength, the two or more cells are sequenced in the order of a pilot strength list provided by the operator.

According to another aspect of the present invention, a base station controller is provided, wherein the base station controller comprises: a receiving module, for receiving pilot environment measurement report domains from every UE of one or more terminal UEs in one scheduling period; a selecting module, for selecting a pre-determined number of cells from the cells indicated by all the pilot environment measurement report domains received in the scheduling period; and a sending module, for transmitting broadcast channel assignment messages carrying the information about the pre-determined cells to the one or more UEs in the scheduling period.

Preferably, the pre-determined number is smaller than the number of searchers of each UE in the one or more UEs.

Preferably, the selecting module includes: a time sequencing module, for sequencing the one or more UEs in a time order of the receiving time of all the pilot environment measurement report domains, to obtain a sequenced UE list; a judging module, for judging whether the number N of cells satisfying pre-determined requirements in the cells indicated by the pilot environment measurement report domain of the current UE in the UE list is larger than or equal to a pre-determined remaining number M, wherein, the pre-determined requirements include: the carrier frequency of a cell being identical to the carrier frequency of the current cell, the geographic location of the cell being adjacent to a source cell, and the cell having not been selected, when the judging module is triggered for the first time, the current UE is the first UE in the UE list, and the pre-determined remaining number M equals to the pre-determined number; a first selecting module, for selecting M cells from the cells satisfying the pre-determined requirements, in the case where the judging module judges that the number N of cells satisfying pre-determined requirements in the cells indicated by the pilot environment measurement report domain of the current UE in the UE list is larger than or equal to a pre-determined remaining number M; and a second selecting module, for selecting all the cells satisfying the pre-determined requirements, designating M=M-N, designating the next UE of the current UE in the UE list to be the current UE, and triggering the judging module, in the case where the judging module judges that the number N of cells satisfying pre-determined requirements in the cells indicated by the pilot environment measurement report domain of the current UE in the UE list is not larger than or equal to a pre-determined remaining number M.

Preferably, the first selecting module includes: a pilot sequencing module, for sequencing the cells satisfying the pre-determined requirements in a pilot strength decreasing order, to obtain a sequenced cell list; and a sequencing selecting module, for selecting the top M cells in the cell list.

Preferably, the pilot sequencing module is further used for, in the case where there are two or more cells that have the same pilot strength, sequencing the two or more cells in the order of a pilot strength list provided by the operator.

With the present invention, the base station controller is used to select a pre-determined number of cells from the cells indicated by all the pilot environment measurement report domains received from one or more UEs, and transmits the information of the selected cells to the one or more UEs, which solves the problem that the BSC of the existing trunking communication system cannot respond to different pilot environment measurement report domains from multiple users in the trunking communication system, and achieves the effects that a plurality of UEs in the trunking communication system can be simultaneously assigned with cells for soft handover.

### Brief Description of the Drawings

The drawings illustrated herein are used to provide a further understanding of the present invention and form a part of the present application. The exemplary embodiments and the description of the present invention thereof are used to explain the present invention without unduly limiting the scope of the present invention, wherein:
Figure 1 is a flowchart of a method for soft handover cell assignment in a trunking communication system according to an embodiment of the present invention;
Figure 2 is a detailed flowchart of a method for soft handover cell assignment in a trunking communication system according to Example 1 of the present invention;
Figure 3 is a detailed flowchart of a method for soft handover cell assignment in a trunking communication system according to Example 2 of the present invention;
Figure 4 is a structural block diagram of a base station controller according to an embodiment of the present invention; and
Figure 5 is a detailed structural block diagram of a base station controller according to an embodiment of the present invention.

### Detailed Description of the Embodiments

The present invention will be described hereinafter in detail in conjunction with the embodiments and with reference to the drawings. It needs to be noted that the embodiments of the present invention and the features in the embodiments can be combined with each other if there is no conflict.

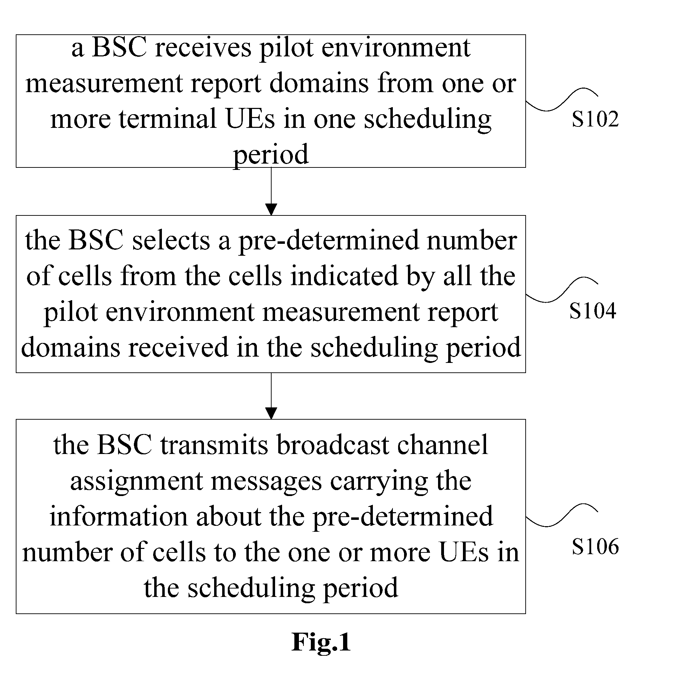

In the embodiments of the present invention, a method for soft handover cell assignment in a trunking communication system is provided. Figure 1 is a flowchart of a method for soft handover cell assignment in a trunking communication system according to an embodiment of the present invention. As shown in Figure 1, the method includes the steps as follows:
Step S102, a base station controller (BSC) receives pilot environment measurement report domains from one or more terminal UEs in one scheduling period;
Step S104, the BSC selects a pre-determined number of cells from the cells indicated by all the pilot environment measurement report domains received in the scheduling period; and
Step S106, the BSC transmits broadcast channel assignment messages carrying the information about the pre-determined number of cells to the one or more UEs in the scheduling period.

In the above method, the BSC uniformly selects a pre-determined number of cells from the cells indicated by all the pilot environment measurement report domains received from one or more UEs, and transmits the information of the selected cells to the one or more UEs, which gives full consideration to the case where the BSC needs to assign cells for multiple UEs at the same time. Compared with the method in the existing ordinary voice communication system in which the BSC only responds to a pilot environment measurement report domain transmitted by a single UE, which results into that cells can be assigned for only one UE, the above method solves the problem that the BSC of the existing trunking communication system cannot respond to different pilot environment measurement report domains from multiple users in the trunking communication system. The above method is especially applicable in the cell assignment for multiple users with different pilot environments in the trunking communication system, and is also applicable in the assignment for one UE in one scheduling period.

Preferably, the pre-determined number is smaller than the number of searchers of each UE in the one or more UEs. As the broadcast channel assignment messages are messages of broadcast type which will be received by all the terminals in the cell, many terminals will receive cell pilots which they do not need, which will affect the pilot searching ability of the service channel of the terminals. In view of the above consideration, the pre-determined number can be configured smaller than the number of searchers of a UE, such that the terminals which receive cell pilots that the terminals do not need can continue transmitting pilot environment measurement report domains to the BSC in the subsequent scheduling period, and accept the cell assignment of the BSC. By the method, the probability of which the UEs receive appropriate cell pilots can increase as much as possible, so as to improve the delayed success rate of the users, and the method has relatively small influence on the searching ability of the terminals, and will not cause call drop of the terminals in the service channel because the cell resources the terminals does not need are assigned to the terminals.

The process in which the BSC selects a pre-determined number of cells from the cells indicated by all the pilot environment measurement report domains received in the scheduling period can include, but is not limited to, the following steps:
the BSC sequences the one or more UEs in a time order of the receiving time of all the pilot environment measurement report domains, to obtain a sequenced UE list; and
the selecting step: the BSC judges whether the number N of cells satisfying pre-determined requirements in the cells indicated by pilot environment measurement report domain of the current UE in the UE list is larger than or equal to a pre-determined remaining number M (the pre-determined remaining number is used for indicating the number of the cells to be further selected which satisfy the pre-determined requirements, with the exception of the number of the cells having been selected which satisfy the pre-determined requirements, wherein the sum of the number of the cells having been selected which satisfy the pre-determined requirements and the number of the cells to be further selected which satisfy the pre-determined requirements is the pre-determined number), If yes, M cells from the cells satisfying the pre-determined requirements are selected. If not, all the cells satisfying the pre-determined requirements are selected; the formula M=M-N is designated; the next UE of the current UE in the UE list is designated to be the current UE, and the selecting step is returned. In the above, the pre-determined requirements include: the carrier frequency of a cell being identical to the carrier frequency of the current cell, the geographic location of the cell being adjacent to a source cell, and the cell having not been selected (the three requirements shall be satisfied at the same time), when the selecting step is implemented for the first time, the current UE is the first UE in the UE list, and the pre-determined remaining number M equals to the pre-determined number.

The specific method for cell selection is given in the process. The BSC first selects the cells indicated in the pilot environment measurement report domains received earlier, and the method first responds to the pilot environment measurement report domains which arrives firstly, and follows the principle of "firstly responding to the request arriving firstly", which is fair to the users. Of course, in the practical application, other cell selection methods can be selected, for example, sequencing in the pilot strength order of the cells, firstly selecting the cells with higher pilot strength and so on.

Preferably, in the case where the number N of the cells satisfying the pre-determined requirements is larger than or equal to the pre-determined remaining number M, the step of the selecting M cells from the cells satisfying the pre-determined requirements includes: sequencing the cells satisfying the pre-determined requirements in a pilot strength decreasing order, to obtain a sequenced cell list; and selecting the top M cells in the cell list. The process is mainly pointed to the above process in which the BSC first selects the cells indicated in the pilot environment measurement report domains received earlier. If it is necessary to select part of the cells indicated by a certain pilot environment measurement report domain, the cell selection can be made by means of first selecting the cells with higher pilot strength, so as to increase the access success rate of the users. In the process of sequencing the cells satisfying the pre-determined requirements in a pilot strength decreasing order, if there are two or more cells that have the same pilot strength, the two or more cells can be sequenced in the order of a pilot strength list provided by the operator, and alternatively the methods of random sequencing or sequencing according to the numbers of the cells or the like can be used, which is not limited in the present invention.

The implementing process of the embodiments in the present invention is described in detail in conjunction with examples as follows.

### Example 1

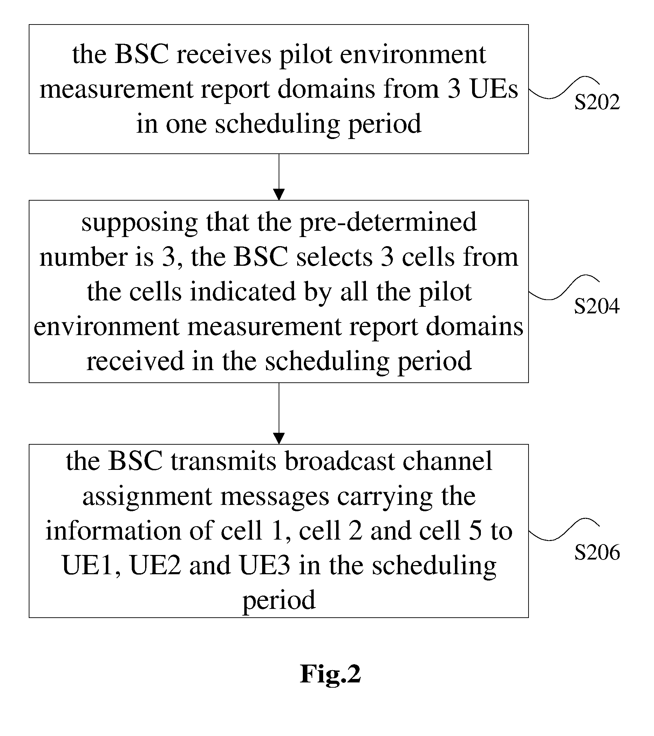

Three UEs are involved in the example, ie. UE1, UE2 and UE3, each having 6 searchers. Figure 2 is a detailed flowchart of a method for soft handover cell assignment in a trunking communication system according to Example 1 of the present invention. As shown in Figure 2, the method comprises the following steps:
Step 201, the BSC receives pilot environment measurement report domains from 3 UEs in one scheduling period, wherein, the pilot environment measurement report domain from UE1 is Pilot Environment Measurement Report Domain 1; the pilot environment measurement report domain from UE2 is Pilot Environment Measurement Report Domain 2; and the pilot environment measurement report domain from UE3 is Pilot Environment Measurement Report Domain 3. It shall be explained that the pilot environment measurement report domains from UE1, UE2 and UE3 may not arrive at the BSC at the same time, but reach the BSC in the current scheduling period. In the example, supposing that the arrival order is: the Pilot Environment Measurement Report Domain 1, the Pilot Environment Measurement Report Domain 2, and the Pilot Environment Measurement Report Domain 3. The Pilot Environment Measurement Report Domain 1 carries the information of cell 1 and cell 2; the Pilot Environment Measurement Report Domain 2 carries the information of cell 2, cell 3 and cell 4; and the Pilot Environment Measurement Report Domain 3 carries the information of cell 1 and cell 5.
Step 202, supposing that the pre-determined number is 3, the BSC selects 3 cells from the cells (ie. cell 1, cell 2, cell 3, cell 4 and cell 5) indicated by all the pilot environment measurement report domains received in the scheduling period. The specific selecting method includes, but not limited to, the following steps:
Step 2021, the BSC sequences the one or more UEs in a time order of the receiving time of the pilot environment measurement report domains, to obtain a sequenced UE list, wherein the UE list herein is (UE1, UE2, UE3).
Step 2022, the BSC judges that the number of the cells (supposing that the carrier frequency of cell 1 and cell 2 is the same as the carrier frequency of the source cell and cell 1 and cell 2 are adjacent to the source cell) of the Pilot Environment Measurement Report Domain 1 which satisfy the requirements is 2 which is smaller than 3, then the BSC selects cell 1 and cell 2 (ie. the cells indicated by the Pilot Environment Measurement Report Domain 1 of UE1 are all selected), and herein, one cell further needs to be selected (the pre-determined remaining number is 1).
Step 2023, the BSC judges that the number of the cells of the Pilot Environment Measurement Report Domain 2 which satisfy the requirements is 0 (cell 2 is selected, supposing that the carrier frequency of cell 3 is different from that of the source cell, and cell 4 is not adjacent to the source cell) which is smaller than 1, and herein, one cell further needs to be selected (the pre-determined remaining number is 1).
Step 2024, the BSC judges that the number of the cells of the Pilot Environment Measurement Report Domain 3 which satisfy the requirements is 1 (cell 1 is selected, supposing that the carrier frequency of cell 5 is the same as the carrier frequency of the source cell, and cell 5 is adjacent to the source cell); then cell 5 is selected; and the selecting process ends.
Step 203, the BSC transmits broadcast channel assignment messages carrying the information of cell 1, cell 2 and cell 5 to UE1, UE2 and UE3 in the scheduling period.

Preferably, the BSC can start the following process immediately after receiving a pilot environment measurement report domain of a UE, without waiting for the pilot environment measurement report domains of other UEs, for example, the step 202 is carried out upon receiving the pilot environment measurement report domain of UE1 in step 201, and if, at the moment, the pilot environment measurement report domains of UE2 and UE3 are further received, step 202 continues to be carried out, so as to improve the processing efficiency of the BSC.

### Example 2

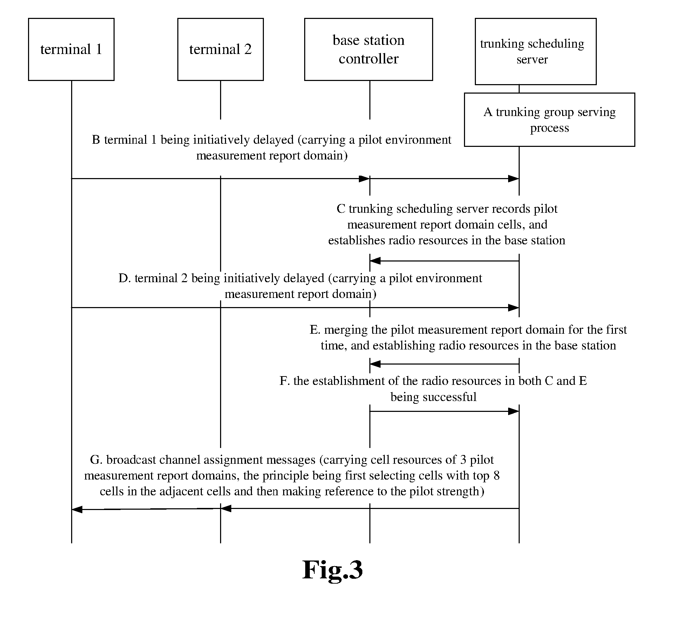

Figure 3 is a detailed flowchart of a method for soft handover cell assignment in a trunking communication system according to Example 2 of the present invention. As shown in Figure 3, the flow includes the steps as follows:
Step A: a trunking service is in process, and a call has been established.
Step B: the BSC receives an access message of terminal 1, wherein the message carries a pilot environment measurement report domain.
Step C: the BSC stores the cells of the access cell pilot environment measurement report domain, and establishes radio resources for the cells carried in the report domain and the access cell (i.e. source cell).
Step D: the BSC receives an access message of terminal 2 in the same cell, wherein the message carries a pilot environment measurement report domain.
Step E: the BSC judges that the current access cell has not transmit a broadcast channel assignment message yet; then the cells of the access cell pilot environment measurement report domain are merged and stored (ie. a source set for cell selection shall include the cells indicated by two pilot environment measurement report domains transmitted by terminal 1 and terminal 2); and radio resources are established for the merged and stored measurement report domain cells.
Step F: a trunking scheduling server successfully establishes radio resources for all the cells selected by the base station controller, and notifies the BSC.
Step G: after the resources have been established, when a short period of time is delayed(optional), the BSC selects 3 cells in the pilot measurement report domain having been successfully established, to perform the broadcast channel assignment. The principle for the selection is first selecting cells with top 8 cells in the carrier frequency adjacent cells of the access cell, if the number of the cells is smaller than 3, the cells with high pilot strength are selected from the remaining cells. The cells are assigned to the terminal 1 and terminal 2 through the broadcast channel assignment messages; the assignment is accomplished and soft handover starts. Preferably, the selecting process of Step G can be implemented through the selecting process of Step 202 in example 1, but the results may be different.

In this example, when the resources of the cell in which the access terminal is located have not been established successfully and the broadcast channel assignment message is not transmitted, if the BSC receives access messages carrying pilot environment measurement report domains from other terminals in the same cell, the BSC will adopt the principle that a cell which is adjacent to the cell have the priority and make reference to the pilot strength, to select the resources of some (a pre-determined number) cells in the pilot environment measurement report domains of the messages which are delayed for many times, to perform the soft handover cell assignment.

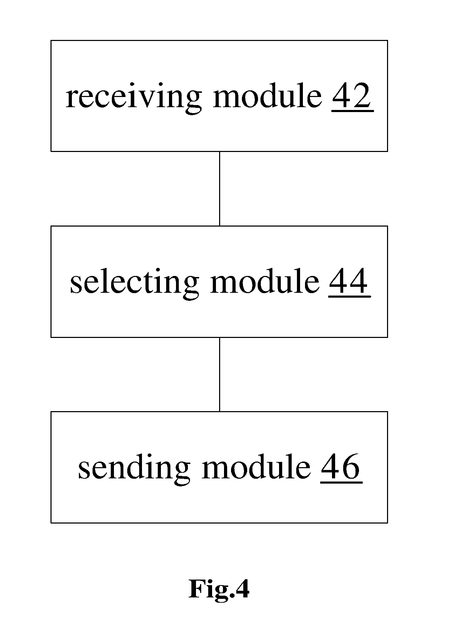

A Base Station Controller (BSC) is further provided in the embodiments of the present invention. Figure 4 is a structural block diagram of a base station controller according to an embodiment of the present invention. As shown in Figure 4, the base station controller comprises: a receiving module 42, for receiving pilot environment measurement report domains from one or more terminal UEs in one scheduling period; a selecting module 44, connected to the receiving module 42, for selecting a pre-determined number of cells from the cells indicated by all the pilot environment measurement report domains received in the scheduling period; and a sending module 46, connected to the selecting module 44, for transmitting broadcast channel assignment messages carrying the information about the pre-determined cells to the one or more UEs in the scheduling period.

Preferably, the pre-determined number is smaller than the number of searchers of each UE in the one or more UEs.

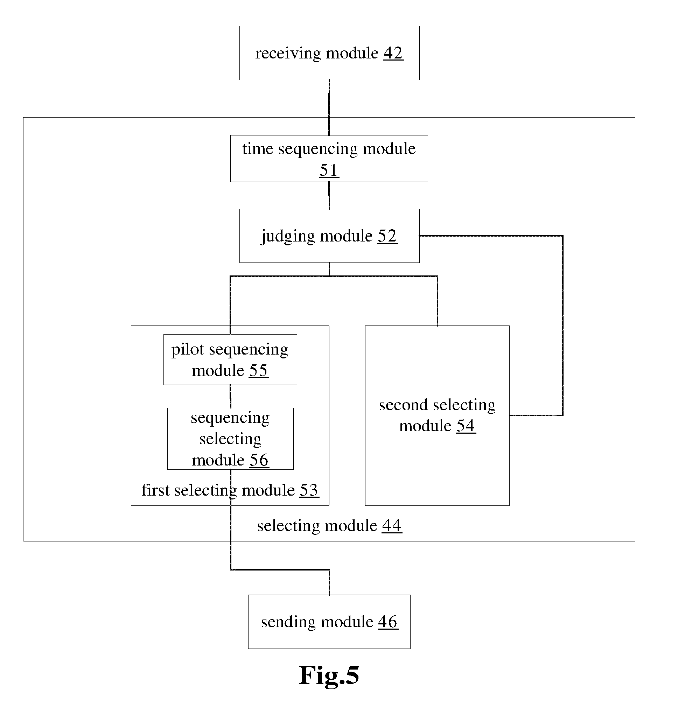

Figure 5 is a detailed structural block diagram of the base station controller according to an embodiment of the present invention. As shown in Figure 5, based on Figure 4, the selecting module 44 includes: a time sequencing module 51, for sequencing the one or more UEs in a time order of the receiving time of all the pilot environment measurement report domains, to obtain a sequenced UE list; a judging module 52, connected to the time sequencing module 51, for judging whether the number N of cells satisfying pre-determined requirements in the cells indicated by pilot environment measurement report domain of the current UE in the UE list is larger than or equal to a pre-determined remaining number M, wherein, the pre-determined requirements include: the carrier frequency of a cell being identical to the carrier frequency of the current cell, the geographic location of the cell being adjacent to the source cell, and the cell having not been selected, when the judging module 52 is triggered for the first time, the current UE is the first UE in the UE list, and the pre-determined remaining number M equals to the pre-determined number; a first selecting module 53, connected to the judging module 52, for selecting M cells from the cells satisfying the pre-determined requirements, in the case where the judging module 52 judges that the number N of cells satisfying pre-determined requirements in the cells indicated by the pilot environment measurement report domain of the current UE in the UE list is larger than or equal to a pre-determined remaining number M; a second selecting module 54, connected to the judging module 52, for selecting all the cells satisfying the pre-determined requirements, designating M=M-N, designating the next UE of the current UE in the UE list to be the current UE, and triggering the judging module 52, in the case where the judging module 52 judges that the number N of cells satisfying pre-determined requirements in the cells indicated by the pilot environment measurement report domain of the current UE in the UE list is not larger than or equal to a pre-determined remaining number M.

Wherein, the first selecting module 53 includes: a pilot sequencing module 55 for sequencing the cells satisfying the pre-determined requirements in a pilot strength decreasing order, to obtain a sequenced cell list; and a sequencing selecting module 56, connected to the pilot sequencing module 55, for selecting the top M cells in the cell list. The pilot sequencing module 55 can be further used for, in the case where there are two or more cells that have the same pilot strength, sequencing the two or more cells in the order of a pilot strength list provided by the operator.

Owing to the above mentioned, the scheme for soft handover cell assignment in a trunking communication system provided in the embodiments of the present invention solves the problem that the BSC in the existing trunking communication system cannot respond to different pilot environment measurement report domains from multiple users in the trunking communication system, and can simultaneously assign cells for soft handover to a plurality of UEs in the trunking communication system.

Obviously, those skilled in the art shall understand that the above modules or steps of the present invention can be realized by a universal computing device, can be concentrated in a single device, or distributed in the network consisting of several computing devices. Alternatively, the modules and the steps of the present invention can be realized by using the executable program code of the calculating device. Consequently, they can be stored in a storage device to be executed by the computing device, and in some cases, the steps shown or described can be carried out in an order that is different from the order herein, or each of them can be manufactured into an integrated circuit module, or several modules or steps of them can be manufactured into a single integrated circuit module. In this way, the present invention is not limited to the combination of any particular hardware and software.

The descriptions above are only preferable embodiments of the present invention, which are not used to restrict the present invention. For those skilled in the art, the present invention may have various changes and variations. Any amendments, equivalent substitutions, improvements etc. within the spirit and principle of the present invention are all concluded in the scope of the claims of the present invention.

## Claims

1. A method for soft handover cell assignment in a trunking communication system, **characterized by** comprising the steps of:
receiving, by a Base Station Controller (BSC), pilot environment measurement report domains from one or more terminal UEs in one scheduling period;
selecting, by the BSC, a pre-determined number of cells from the cells indicated by all the pilot environment measurement report domains received in the scheduling period; and
transmitting, by the BSC, broadcast channel assignment messages carrying the information about the pre-determined number of cells to the one or more UEs in the scheduling period.

2. The method according to Claim 1, **characterized in that** the pre-determined number is smaller than the number of searchers of each UE in the one or more UEs.

3. The method according to Claim 1, **characterized in that** the step of selecting, by the BSC, the pre-determined number of cells from the cells indicated by all the pilot environment measurement report domains received in the scheduling period includes:
sequencing, by the BSC, the one or more UEs in a time order of the receiving time of all the pilot environment measurement report domains, to obtain a sequenced UE list; and
a selecting step: judging, by the BSC, whether the number N of cells satisfying pre-determined requirements in the cells indicated by pilot environment measurement report domains of the current UE in the UE list is larger than or equal to a pre-determined remaining number M, if yes, selecting M cells from the cells satisfying the pre-determined requirements; if not, selecting all the cells satisfying the pre-determined requirements, designating M=M-N, designating the next UE of the current UE in the UE list to be the current UE, and returning to the selecting step, wherein, the pre-determined requirements include: the carrier frequency of a cell being identical to the carrier frequency of the current cell, the geographic location of the cell being adjacent to a source cell, and the cell having not been selected, when the selecting step is implemented for the first time, the current UE is the first UE in the UE list, and the pre-determined remaining number M equals to the pre-determined number.

4. The method according to Claim 3, **characterized in that** in the case where the number N of the cells satisfying the pre-determined requirements is larger than or equal to the pre-determined remaining number M, the step of the selecting M cells from the cells satisfying the pre-determined requirements includes:
sequencing the cells satisfying the pre-determined requirements in a pilot strength decreasing order, to obtain a sequenced cell list; and
selecting the top M cells in the cell list.

5. The method according to Claim 4, **characterized in that** in the process of sequencing the cells satisfying the pre-determined requirements in a pilot strength decreasing order, if there are two or more cells that have the same pilot strength, the two or more cells are sequenced in the order of a pilot strength list provided by the operator.

6. A Base Station Controller (BSC), **characterized by** comprising:
a receiving module, for receiving pilot environment measurement report domains from every UE of one or more terminal UEs in one scheduling period;
a selecting module, for selecting a pre-determined number of cells from the cells indicated by all the pilot environment measurement report domains received in the scheduling period; and
a sending module, for transmitting broadcast channel assignment messages carrying the information about the pre-determined cells to the one or more UEs in the scheduling period.

7. The BSC according to Claim 6, **characterized in that** the pre-determined number is smaller than the number of searchers of each UE in the one or more UEs.

8. The BSC according to Claim 6, **characterized in that** the selecting module includes:
a time sequencing module, for sequencing the one or more UEs in a time order of the receiving time of all the pilot environment measurement report domains, to obtain a sequenced UE list;
a judging module, for judging whether the number N of cells satisfying pre-determined requirements in the cells indicated by the pilot environment measurement report domains of the current UE in the UE list is larger than or equal to a pre-determined remaining number M, wherein, the pre-determined requirements include: the carrier frequency of a cell being identical to the carrier frequency of the current cell, the geographic location of the cell being adjacent to the source cell, and the cell having not been selected, when the judging module is triggered for the first time, the current UE is the first UE in the UE list, and the pre-determined remaining number M equals to the pre-determined number;
a first selecting module, for selecting M cells from the cells satisfying the pre-determined requirements, in the case where the judging module judges that the number N of cells satisfying pre-determined requirements in the cells indicated by the pilot environment measurement report domain of the current UE in the UE list is larger than or equal to a pre-determined remaining number M; and
a second selecting module, for selecting all the cells satisfying the pre-determined requirements, designating M=M-N, designating the next UE of the current UE in the UE list to be the current UE, and triggering the judging module, in the case where the judging module judges that the number N of cells satisfying pre-determined requirements in the cells indicated by the pilot environment measurement report domain of the current UE in the UE list is not larger than or equal to a pre-determined remaining number M.

9. The BSC according to Claim 8, **characterized in that** the first selecting module includes:
a pilot sequencing module, for sequencing the cells satisfying the pre-determined requirements in a pilot strength decreasing order, to obtain a sequenced cell list; and
a sequencing selecting module, for selecting the top M cells from the cell list.

10. The BSC according to Claim 9, **characterized in that** the pilot sequencing module is further used for, in the case where there are two or more cells that have the same pilot strength, sequencing the two or more cells in the order of a pilot strength list provided by the operator.
